# EUROPEAN PATENT SPECIFICATION

(11) **EP 2 391 097 B1**
(45) Date of publication and mention of the grant of the patent: **03.10.2012**
(21) Application number: 10460019.2
(22) Date of filing: 24.05.2010
(51) Int. Cl.: H04M 1/04

(54) **Mobile phone holder**
Mobiltelefonhalter
Support de téléphone mobile

(43) Date of publication of application: 30.11.2011
(73) Proprietor: BURY Sp. z o.o., 39-300 Mielec (PL)
(72) Inventor: Jasnowski, Robert, 35-307 Rzeszow (PL)
(74) Representative: Kaminski, Zbigniew

(56) References cited:
- EP-A1- 2 080 672
- DE-A1-102007 037 944

## Description

This invention relates to a mobile phone holder, especially for mechanical vehicles, having a bipartite body consisting of a base and a cover and provided with a hooked catch, which is adapted to lock and release the phone in the holder.

German patent DE 102 60 951 A1 discloses a mobile phone holder, which consists of a base mounted to a dashboard of a vehicle and of a plurality of countercontacts mounted to the base by means of an articulated joint. On the base, there is a sliding element, which may be moved along a longitudinal axis of the base and blocked in at least two positions, the said sliding element is provided with a lock, which is located opposite to the plurality of countercontacts and is adapted to keep the phone detachably in its working position.

German patent DE 10 2006 005 111 B4 discloses a mobile phone holder, which has a casing with a socket adapted to accommodate a mobile phone and provided with two walls, opposite to each other, which the mobile phone's front and rear walls adhere to. The front wall has sections, which embrace a portion of the front side of the mobile phone. The rear wall is fixed whereas the front wall may be moved forward and compresses a spring. The rear wall is provided with a cavity, in which the rear wall of the phone rests. The mobile phone may be inserted into the cavity in the rear wall and in the socket only when the front wall is moved. The rear wall is also provided with contacts that are adapted to connect electric circuits of the holder with the mobile phone.

European patent application EP 2026544 A1 discloses a mobile phone holder for mechanical vehicles, which consists of a base and a cover, connected with the base and provided with a cavity, into which a mobile phone can be inserted downwards from the top, and with lateral protrusions with guides, which are adapted to guide the mobile phone. An unlocking mechanism of the holder consists of a slide, which favourably has a form of a plate, which one end is provided with a double-sided toothed bar, while the other end is provided with pivots that push the phone out from the holder.

European patent application No. EP 2080672 A1 discloses a mobile phone holder, which is provided with a power plug mounted slideably in guides of a base, inclined to an axis of the holder, and in the corresponding guides of a cover. A power plug casing is provided with a protrusion, which sits in a guide in a protrusion of the slide.

A major inconvenience of the mobile phone holders known in the state-of-the-art is that these holders are not suitable for those modern mobile phones, where a lower portion of a phone with a keyboard, and thus an axis of a socket is inclined in relation to a longitudinal and/or transverse axis of the phone.

Moreover, many known mobile phone holders are provided with a power plug, which is inserted by hand. As a result, these elements wear out or even break relatively quickly as it is difficult to ensure the position of the plug along the axis of the socket.

An object of this invention is to provide a mobile phone holder, which is provided with a connecting socket, e.g. a power supply socket, in particular, a socket inclined at an angle to an axis of a phone, and adapted to ensure a coaxial movement of corresponding plugs in the mobile phone socket.

According to the invention there is provided a mobile phone holder, especially for mechanical vehicles, which is characterized in that it is provided with a pushing and locking mechanism, that consists of:
a plug unit, mounted slideably in the guides,
a pushing element, which moves the plug unit,
a pin, which is slideably mounted in the cover, the pin being adapted to allow the action of the plug unit, only when pressed down by rear wall of the phone sitting in the holder, and
a slideable releasing element with a plate, which protrusion is adapted to engage with a protrusion of the pushing element, thus blocking it in its as-pressed position, when the releasing element is in its pushed-out position.

The pushing element of the holder has favourably a form of a pushing button.

The releasing element of the holder has favourably a form of a releasing button, which is one entirety with the plate and its protrusion.

Preferably, the pushing button is provided with a front surface, which is adapted to engage with a protrusion of the known hooked catch, provided with a return spring.

In a preferred embodiment, the pushing and locking mechanism of the holder is provided with a mounting plate with guides to guide a slide having a protrusion adapted to engage with the pin mounted slideably along the axis in the cover.

Advantageously, the pushing and locking mechanism of the holder is provided with a micro-switch of a power circuit, which is adapted to switch the power on, when the pushing button is in its as-pressed position.

It is preferred, that the mounting plate of the pushing and locking mechanism of the holder, together with the plug unit mounted to it, the pushing button, the releasing button with the plate, the slide and springs, and the known hooked catch with the return spring, constitute one unit being mounted to the body of the holder.

The pushing button of the holder is favourably mounted in a notch in one of transverse walls of the cover, whereas the releasing button is located in a notch in one of longitudinal walls.

The pushing button of the holder is preferably located in a notch in transverse walls.

Performance tests of the mobile phone holder according to the invention proved, that the holder has a universal applicability, is suitable not only for flat phones, but also for those phones, which keyboard and connecting socket are inclined to the axis of the phone, and ensures that plugs of the holder are inserted and connected properly in the corresponding sockets of the phone. In particular, in case of high vibrations, which a mechanical vehicle is exposed to while being driven on an uneven road, flexible elements of the holder ensure that the phone sits in the holder firmly. The holder is adapted to enable inserting the plugs only if it is necessary, e.g. a power plug in case of charging a battery.

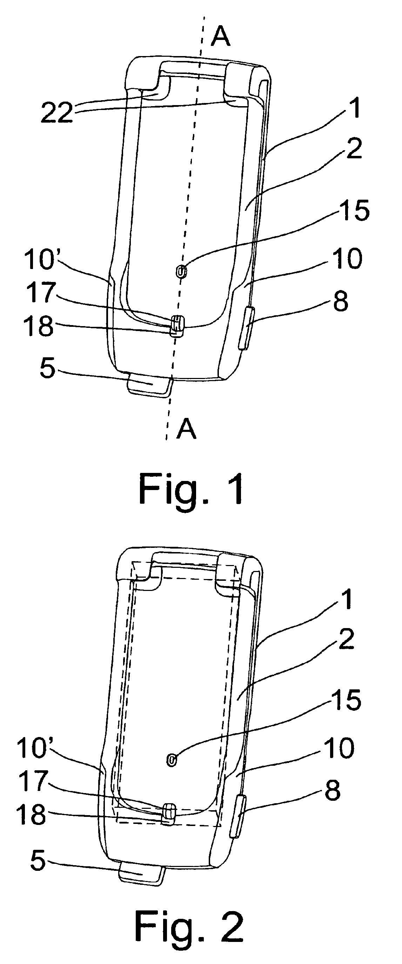

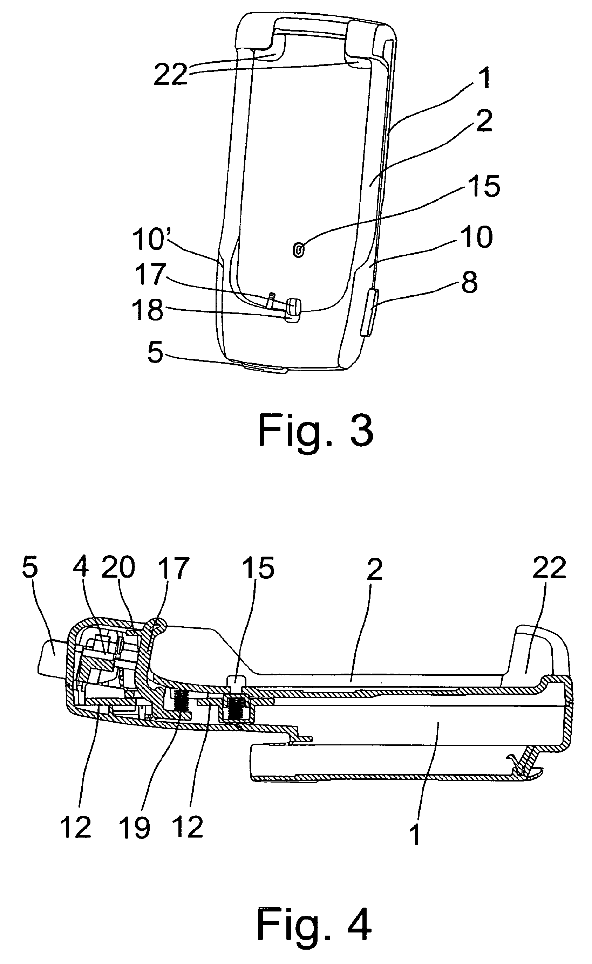

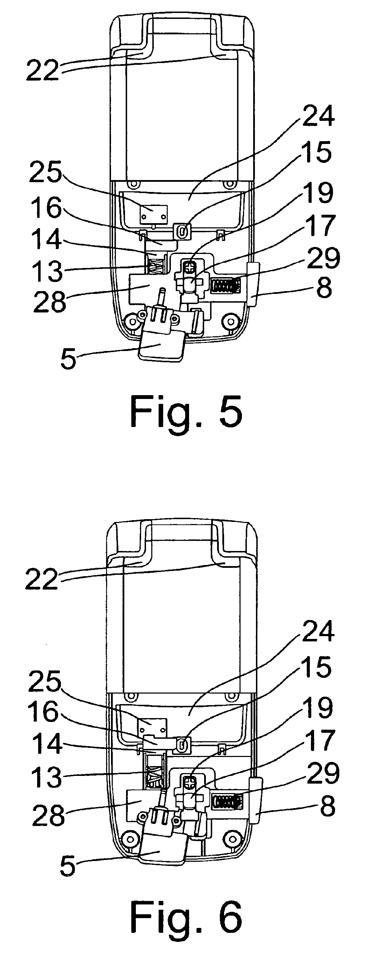

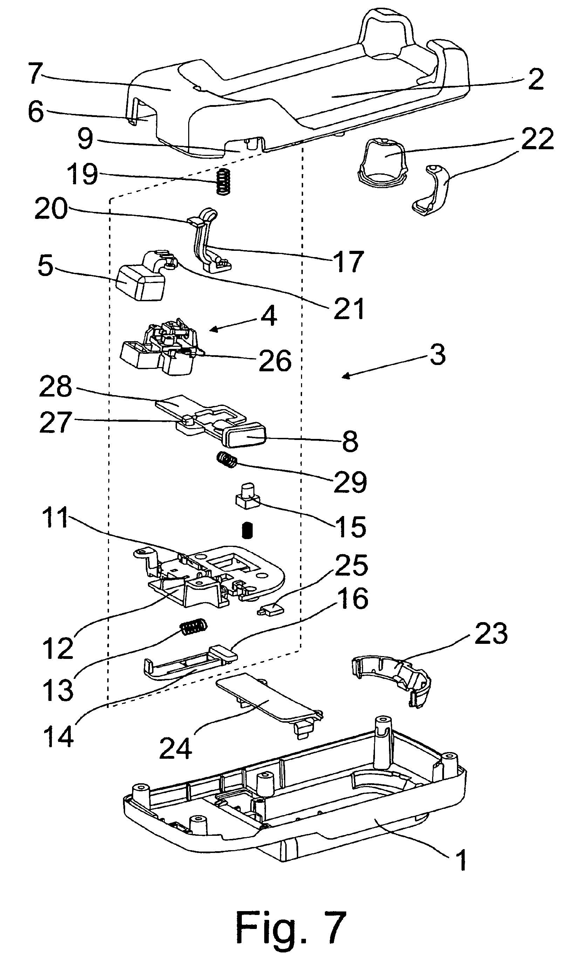

A mobile phone holder, especially for mechanical vehicles, is depicted in the drawings, where: Fig. 1 - is a perspective front view of the holder before a mobile phone is inserted, where the movement of an electric plug of the holder is blocked, Fig. 2 - is a perspective front view of the same holder with the mobile phone inserted and the movement of the plug unlocked, Fig. 3 - is a perspective front view of the same holder with the mobile phone inserted and the plug pressed into the phone, Fig. 4 - is a cross-section of the holder with the phone in the as-locked position along the longitudinal A-A axis of Fig. 1, Fig. 5 - is a cross-section of the holder with the plug removed from the phone along the longitudinal B-B axis of Fig. 4, Fig. 6 - is a cross-section of the holder with the plug inserted into a phone socket along the longitudinal B-B axis of Fig. 4, and Fig. 7 - is an exploded view of the holder.

A mobile phone holder, especially for mechanical vehicles, according to the invention, has a bipartite body, which consists of a base **1,** a cover **2,** and a pushing and locking mechanism **3** that is adapted to move and block a plug unit **4.**

A pushing element, which moves the plug unit **4,** in one of the embodiments of the invention depicted in the drawing, has a form of a pushing button **5,** which protrudes through a notch **6** in one of transverse walls **7, 7'** of the cover, whereas a releasing element has, for example, a form of a releasing button **8.** The releasing button **8** protrudes through a notch **9** in one of longitudinal walls **10, 10'** of the cover and is mounted slideably in guides **11** of a mounting plate **12,** in which are all components of the pushing and locking mechanism **3.** The pushing button **5,** mounted in guides of the cover **2,** not depicted on in the drawing, is subject to a force exerted by a return spring **13** on a slide **14** and causing the return movement of the plug unit 4 with the pushing button **5.**

When the plug unit **4** is inserted in a phone socket, it is blocked as a result of a protrusion **26** of the pushing button 5 being caught by a protrusion **27** located on a plate **28** of the releasing button **8,** which is in its pushed-out position under the force exerted by a spring **29.**

An unlocking pin **15,** mounted slideably in the cover **2** along the transverse C-C axis, is adapted to interlock with a protrusion **16** in the slide **14,** thus blocking this slide in its pushed-out position and releasing it in its as-inserted position. Thanks to this the movement of the plug unit **4** with the pushing button **5** is possible only if the pin **15** is pressed down by the rear wall of the phone.

The pushing and releasing mechanism **3** is also provided with a resilient hooked catch **17,** which is mounted rotatably in a notch **18** of the cover **2** and is subject to a force exerted by a spring **19.** The hooked catch is adapted to deflect flexibly under the pressure of the mobile phone being inserted into the holder and to catch an edge of a phone body, thus locking the phone in the holder. While the phone is being removed from the holder, its edge pushes the hooked catch **17,** which is under the pressure of the spring, and thus enables removing the phone without any additional operations. In case of the plug of the plug unit **4** sits in the phone, a protrusion **20** of the hooked catch **17** is in contact with a front surface **21** of the pressed pushing button **5** and prevents a deflection of this hooked catch and thus makes impossible to remove the phone from the holder when the plug is inserted in the phone.

The phone holder is also provided with a micro-switch **25,** mounted on the mounting plate **12,** and connected to a circuit, which switches on the power supply to the phone. By means of the protrusion **16** in the slide **14,** when the plug unit **4** is in its as-inserted position, the micro-switch **25** is switched, which results in feeding the plug unit **4.**

The mounting plate **12** of the pushing and locking mechanism **3,** together with the plug unit **4** mounted to it, the pushing button **5,** the releasing button **8** with the plate **28,** slide **14** and springs **13** and **29,** and the known hooked catch **17** with the spring **19,** is one unit and is mounted to the body of the holder.

The mobile phone holder, according to the invention, is also provided with flexible corners **22** mounted in corners of the cover **2** and used to prevent damages and to increase the flexibility of accommodating the phone in the holder, which is of particular importance in case of vibrations in the vehicle.

The holder is also provided with a curved element **23,** which is adapted to accommodate a curved portion of a rack, not depicted in the drawing, to which the holder is mounted and with a flat element **24,** which is adapted to protect an electronic board mounted in the base **1** of the body.

The embodiment of the invention, as described above, may be subject to modifications such as changes of the form of the pushing and locking elements, e.g. electromagnets, motors, etc.

Also, the layout of the pushing elements within the body of the holder may be different.

## Claims

1. A mobile phone holder, especially for mechanical vehicles, having a bipartite body, which consists of a base (**1**) and a cover (**2**), and provided with a hooked catch (**17**), which is adapted to lock and to release the mobile phone in the holder, **characterized in that** it is provided with a pushing and locking mechanism (**3**) that consists of:
a plug unit (**4**), mounted slideably in guides,
a pushing element (**5**), which moves the plug unit (**4**),
a pin (**15**), which is slideably mounted in the cover (**2**), the pin (**15**) being adapted to allow the action of the plug unit (**4**), only when pressed down by rear wall of the phone sitting in the holder, and
a slideable releasing element (**8**) with a plate (**28**), which protrusion (**27**) is adapted to engage with a protrusion (**26**) of the pushing element (**5**), thus blocking it in its as-pressed position, when the releasing element (**8**) is in its pushed-out position.

2. The holder according to the Claim 1, **characterized in that** the pushing element (**5**) of the holder has a form of a pushing button (**5**).

3. The holder according to the Claim 1, **characterized in that** the releasing element (**8**) has a form of a releasing button (**8**), which is one entirety with the plate (**28**) and its protrusion (**27**).

4. The holder according to the Claim 1, **characterized in that** the pushing button (**5**) is provided with a front surface (**21**), which is adapted to engage with a protrusion (**20**) of the known hooked catch (**17**), provided with a return spring (**19**).

5. The holder according to the Claim 1, **characterized in that** the pushing and locking mechanism (**3**) is provided with a mounting plate (**12**) with guides (**11**) to guide a slide (**14**), which has a protrusion (**16**) adapted to engage with the pin (**15**) mounted slideably along the C-C axis in the cover (**2**).

6. The holder according to the Claim 1 or 2, **characterized in that** the pushing and locking mechanism (**3**) is provided with a micro-switch (**25**) of a power circuit, which is adapted to switch the power on, when the pushing button (**5**) is in its as-pressed position.

7. The holder according to any of the proceeding Claims 1 - 5, **characterized in that** the mounting plate (**12**) of the pushing and locking mechanism (**3**), together with the plug unit (**4**) mounted to it, the pushing button (**5**), the releasing button (**8**) with the plate (**28**), slide (**14**) and springs (**13, 29**), and the known hooked catch (**17**) with the return spring (**19**), constitute one unit being mounted to the body of the holder.

8. The holder according to the Claim 2 or 3, **characterized in that** the pushing button (**5**) is mounted in a notch (**6**) in one of transverse walls (**7**, **7'**) of the cover (**2**), whereas the releasing button (**8**) is located in a notch (**9**) in one of longitudinal walls (**10**, **10'**).

9. The holder according to the Claim 2, **characterized in that** the pushing button (**5**) is located in a notch (**9**) in transverse walls (**7**, **7'**).

## Patentansprüche

1. Mobiltelefonhalterung, bestehend aus einem zweiteiligem Gehäuse mit einem Grundkörper (**1**) und einem Deckel (**2**), ausgerüstet mit einem Haken (**17**) zur Verriegelung und Entriegelung des Telefons in der Halterung, **gekennzeichnet dadurch, dass** sie mit einem Verschiebe und Verriegelungsmechanismus (**3**) ausgerüstet ist, der aus den folgenden Komponenten besteht:
Steckeinheit (**4**), die in Führungen verschiebbar gelagert ist,
Verschiebeelement (**5**), das die Steckeinheit verschiebt (**4**),
Pilzelement (**15**), das im Deckel (**2**) verschiebbar befestigt ist, wobei das Pilzelement (**15**) die Funktion der Steckeinheit (**4**) nur dann freigibt, wenn es durch die Rückwand des in der Halterung befindlichen Telefons gedrückt wird, sowie
verschiebbares Entriegelungselement (**8**) mit Platte (**28**), deren Vorsprung (**27**) zusammen mit dem Vorsprung (**26**) des Verschiebeeiements (**5**) funktionieren kann und es in gedrückter Stellung hält, wenn das Entriegelungselement (**8**) gedrückt ist.

2. Halterung nach Anspruch 1, **gekennzeichnet dadurch, dass** das Verschiebeelement (**5**) die Form des Verschiebetasters (**5**) hat.

3. Halterung nach Anspruch **gekennzeichnet dadurch, dass** das Entriegelungselement (**8**) die Form des Entriegelungstasters (**8**) hat, der eine Einheit mit der Platte (**28**) und dem Plattenvorsprung (**27**) bildet.

4. Halterung nach Anspruch 1, **gekennzeichnet dadurch, dass** ihr Verschiebetaster (**5**) über eine Stirnfläche (**21**) verfügt, die zusammen mit dem Vorsprung (**20**) des bekannten Hakens (**17**) funktioniert, der mit einer Rückstellfeder (**19**) ausgerüstet ist.

5. Halterung nach Anspruch 1, **gekennzeichnet dadurch, dass** ihr Verschiebe- und Verriegelungsmechanismus (**3**) mit der Montageplatte (**12**) mit Führungen (**11**) ausgerüstet ist zur Führung des Schiebers (**14**) mit dem Vorsprung (**16**), der zusammen mit dem verschiebbar in der C-C-Achse im Deckel (**2**) gelagerten Pilzelement (**15**) funktioniert.

6. Halterung nach Anspruch 1 oder 2, **gekennzeichnet dadurch, dass** ihr Verschiebe- und Verriegelungsmechanismus (**3**) mit einem Mikroschalter (**25**) des Versorgungssystems ausgerüstet ist, der die Stromversorgung in der gedrückter Stellung des Verschiebetasters (**5**) einschaltet.

7. Halterung nach einem der oben genannten Ansprüche 1 bis 5, **gekennzeichnet dadurch, dass** die Montageplatte (**12**) des Verschiebe- und Verriegelungsmechanismus (**3**) zusammen mit der daran angebrachten Steckeinheit (**4**), dem Verschiebetaster (**5**), dem Entriegelungstaster (8), der Platte (**28**), dem Schieber (**14**) und den Federn (**13**, **29**) und dem bekannten Haken (**17**) mit der Rückstellfeder (**19**) eine Einheit bilden, die am Halterungsgehäuse befestigt ist.

8. Halterung nach Anspruch 2 oder 3, **gekennzeichnet dadurch, dass** der Verschiebetaster (**5**) in der Aussparung (**6**) einer der Querwände (**7**, **7'**) des Deckels (**2**) gelagert ist und der Entriegelungstaster (**8**) sich in der Aussparung (**9**) einer der Längswände (**10**, **10'**) befindet.

9. Halterung nach Anspruch 2, **gekennzeichnet dadurch, dass** der Verschiebetaster (**5**) sich in der Aussparung (**9**) der Querwände (**7**, **7'**) befindet.

## Revendications

1. Le support du téléphone portable, composé d'un boîtier bipartible qui contient une base (**1**) et un couvercle (**2**), tant qu'il est equipé d'une bride de crochet (**17**) adapté à bloquer et à desserrer le téléphone du support, **caractérisé par le fait qu'**il est équipé d'un mécanisme décalant-bloquant (**3**) composé de :
- ensemble de la prise (**4**) fixé d'une manière décalant dans les glissières,
- élément décalant (**5**) qui déplace l'ensemble de la prise (**4**),
- champignon (**15**) qui est monté d'une manière décalant dans le couvercle (**2**), sachant que le champignon (**15**) est adapté à permettre de fonctionner à l'ensemble de la prise (**4**) quand il est poussé par une parroi arrière du téléphone fixé dans le support, et
- élément décalant désserant (**8**) avec une plaque (**28**) dont la saillie (**27**) est adaptée à la coopération avec une saillie (**26**) d'un élément décalant (**5**) en le biloquant dans une position fixée, quant l'élément desserant (**8**) se trouve dans sa position fixée.

2. Le suport, selon la revendication 1, **caractérisé par le fait que** l'élément dé**c**alant (**5**) est en forme d'un bouton décalant (**5**).

3. Le suport, selon la revendication 1, **caractérisé par le fait que** l'élément deserrant (**8**) est en forme d'un bouton desserant (**8**) qui constitue un ensemble avec la plaque (**28**) et sa saillie (**27**).

4. Le suport, selon la revendication 1, **caractérisé par le fait que** son poussoir décalant (**5**) est jest équipé d'une surface frontale (**21**) adaptée à la coopération avec une saillie (**20**) de la bride de crochet (**17**) équipé d'un ressort de rappel (**19**).

5. Le suport, selon la revendication 1, **caractérisé par le fait que** son mécanisme décalant-bloquant (**3**) est équipé d'une plaque de montage (**12**) avec des glissières (**11**), pour conduire un décaleur (**14**) possédant un saillie (**16**) adapté à la coopération avec le champignon (**15**) fixé d'une manière glissante, le long d'une axe C-C, dans le couvercle (**2**).

6. Le suport, selon la revendication 1 ou 2, **caractérisé par le fait que** son mécanisme décalant-bloquant (**3**) est équipé d'un micro-combinateur (**25**) d'un système d'alimentation, mettant en circuit dans une position fixée du poussoir décalant (**5**).

7. Le suport, selon l'un des revendications précédentes 1 à 5, **caractérisé par le fait que** la plaque de montage (**12**) du mécanisme décalant-bloquant (**3**) avec l'ensemble de prise fixé sur elle (**4**), le poussoir décalant (**5**), le poussoir desserant (**8**), la plaque (**28**), le décaleur (**14**) et les ressorts (**13**, **29**), aussi que la bride de crochet (**17**) avec le ressort de rappel (**19**) - constitue un ensemble fixé au boîtier du support.

8. Le suport, selon la revendication 2 ou 3, **caractérisé par le fait que** son poussoir décalant (**5**) est fixé dans une encoche (**6**) de l'une des parrois transversales (**7**, **7'**) du couvercle (**2**), tant que le poussoir desserant (**8**) est fixé dans une encoche (**9**) de l'une des parois longitudinales (**10**, **10**').

9. Le suport, selon la revendication 2, **caractérisé par le fait que** le poussoir décalant (**5**) est fixé dans l'encoche (**9**) des parrois transversales (**7**, **7'**).
